# EUROPÄISCHE PATENTSCHRIFT

(11) **EP 0 404 879 B1**
(45) Veröffentlichungstag und Bekanntmachung des Hinweises auf die Patenterteilung: **06.04.1994**
(21) Anmeldenummer: 89911747.7
(22) Anmeldetag: 24.10.1989
(51) Int. Cl.: F01N 3/02, C04B 38/00

(54) **VORRICHTUNG ZUM VERGLÜHEN VON FESTKÖRPERN SOWIE VERFAHREN ZUR HERSTELLUNG EINER DERARTIGEN VORRICHTUNG**
DEVICE FOR BURNING OUT SOLIDS, AND PROCESS FOR MANUFACTURING SAID DEVICE
DISPOSITIF D'INCINERATION DE SOLIDES ET SON PROCEDE DE FABRICATION

(30) Priorität: 24.10.1988 AT 2636/88
(43) Veröffentlichungstag der Anmeldung: 02.01.1991
(73) Patentinhaber: SCHNEIDER, Siegfried, 2340 Möding (AT)
(72) Erfinder: SCHNEIDER, Siegfried, 2340 Möding (AT)
(74) Vertreter: Kretschmer, Adolf
(86) Internationale Anmeldenummer: AT8900092
(87) Internationale Veröffentlichungsnummer: WO9004707

(56) Entgegenhaltungen:
- DE-A- 3 704 930
- DE-U- 8 700 787
- US-A- 4 662 911

## Beschreibung

Die Erfindung bezieht sich auf eine Vorrichtung zum Verglühen von Festkörpern und Brechen von chemischen Verbindungen in einem Gasstrom, insbesondere zur Beseitigung von Ruß aus Abgasen.

Für die Abscheidung von Festkörpern aus Gasströmen ist es bereits bekanntgeworden, Fliehkraftabscheider oder Zyklone einzusetzen. Derartige Einrichtungen können auch als Heißzyklone ausgebildet sein. In mobilen Anlagen, welche zur Emission von Festkörpern gemeinsam mit einem Gasstrom Anlaß geben, lassen sich derartige Heißzyklone aber nicht ohne weiteres einsetzen, da sie zum einen einen aufwendigen Antrieb erfordern, und zum andern einen relativ hohen Platzbedarf aufweisen. Ebenso wie bei anderen bekannten Einrichtungen zur Abscheidung von Feststoffen aus Gasströmen, wie beispielsweise Filteranlagen, kommt bei derartigen Einrichtungen dazu, daß die im Gasstrom mitgerissenen Festkörper lediglich konzentriert und gesammelt werden und daß daher im Zuge des Betriebes derartiger Einrichtungen für eine regelmäßige Ausbringung der abgeschiedenen Festkörper Sorge getragen werden muß. Aus der DE-U-87 00 787 ist ein derartiges Restfilter für Dieselmotoren bekanntgeworden, wobei im Filtergehäuse in Wirrlage angeordnete keramische Fasern angeordnet sind und im Filterkörper ein Heizdraht eingebettet ist. Filter neigen jedoch, soweit sie überhaupt für die Abscheidung kleinster Teilchen, insbesondere lungengängiger Teilchen, in Betracht kommen, dazu, ihre Filterkapazität nach kürzerer Zeit zu erschöpfen, wobei insbesondere für die Abscheidung von kleinsten Teilchen der durch derartige Filterflächen erzeugte Staudruck einem raschen Ausströmen von Gasen entgegensteht.

Eine Reihe von Gasströmen, wie sie von Verbrennungskraftmaschinen oder Verbrennungsanlagen erzeugt werden, enthält Teilchen unterschiedlicher Dichte und Masse, wobei insbesondere bei Verbrennungskraftmaschinen, wie beispielsweise Dieselmotoren, Rußteilchen mit den Abgasen mitgerissen werden. Ein Großteil dieser bei Verbrennungskraftmaschinen im Abgas enthaltenen Festkörper besteht vorwiegend aus Kohlenstoff und es bestünde daher prinzipiell die Möglichkeit, derartige Feststoffe durch Verbrennung bzw. Verglühen zu eliminieren. Bei den im Brennraum derartiger Brennkraftmaschinen auftretenden Temperaturen ist aber offensichtlich die vollständige Verbrennung bzw. das Verglühen derartiger Teilchen nicht möglich gewesen und die verbleibenden, im Abgas mittransportierten Teilchen zeichnen sich dadurch aus, daß sie auf Grund der höheren Temperaturen, welchen sie im Brennraum derartiger Brennkraftanlagen ausgesetzt waren, nur erschwert und mit einfachen Mitteln nicht verbrannt werden können.

Die Erfindung zielt nun darauf ab, eine konstruktiv einfache Vorrichtung der eingangs genannten Art zu schaffen, derartige Festkörper, insbesondere Festkörper, wie sie von Einspritzbrennkraftmaschinen, wie Dieselmotoren, ausgestoßen werden, in einfacher Weise zu beseitigen, ohne daß die dafür benötigte Vorrichtung zum Zwecke der Entfernung abgeschiedener Festteilchen häufig einer Kontrolle unterzogen werden muß, wobei gleichzeitig darauf abgezielt wird, auf komplizierte Antriebe in einer derartigen Vorrichtung zu verzichten und eine Vorrichtung mit möglichst geringem Platzbedarf zu schaffen, welche sich auch zum Einsatz in mobilen Generatoren eignet, mit welchen derartige feststoffhaltige Gase ausgestoßen werden. Zur Lösung dieser Aufgabe besteht die Erfindung im wesentlichen darin, daß ein aus hochtemperaturfestem und temperaturwechselfestem Material bestehender Grundkörper mit wenigstens einem Durchtrittskanal für den Gasstrom ausgebildet ist, daß der Durchtrittskanal als im wesentlichen spiralförmiger Kanal ausgebildet ist und daß der Grundkörper mit Heizeinrichtungen zur Erzielung von Temperaturen über 1300°C, vorzugsweise über 1900°C, versehen ist. Dadurch, daß ein Grundkörper aus entsprechend hochtemperaturfestem und temperaturwechselfestem Material vorliegt, wird die Möglichkeit geschaffen, durch Heizeinrichtungen wesentlich höhere Temperaturen zu erzielen, als sie üblicherweise in Abgasen von Verbrennungskraftmaschinen oder Brennkraftanlagen auftreten. Erst die Erzielung derartig höherer Temperaturen erlaubt es nun, ein durch wenigstens einen Durchtrittskanal eines derartigen Grundkörpers strömendes Gas zumindest in bezug auf seinen Feststoffanteil in einer Weise zu erwärmen, welche sicherstellt, daß feste, chemische Verbindungen, beispielsweise Dioxine und Furane, zersetzt und gespalten werden und daß schwer brennbare Teilchen, wie beispielsweise verkokte Rußpartikel, sicher verglüht werden. Temperaturen über 1300°C, welche durch Heizeinrichtungen im gesamten Durchtrittskanal aufrechterhalten werden, reichen dabei aus, derartige chemische Verbindungen zu zersetzen und eine eventuelle Rekombination beim Austritt mit einem damit verbundenen Abkühlen zu verhindern. Die Dimensionierung des oder der Durchtrittskanäle eines derartigen Grundkörpers kann entsprechend den Anforderungen auf den maximal zulässigen Staudruck gewählt werden, und es kann durch geeignete Formgebung der Durchtrittskanäle sichergestellt werden, daß die zu verglühenden Feststoffanteile nicht nur einer hohen Temperaturbelastung, welche das Verglühen ermöglicht, sondern gleichzeitig auch einer mechanischen, abrasiven Belastung unterworfen werden, so daß eine rückstandsfreie Eliminierung derartiger Festkörper gelingt, wodurch der Wartungsaufwand für derartige Vorrichtungen entfällt. Dadurch, daß der Durchtrittskanal als im wesentlichen spiralförmiger Kanal ausgebildet ist, gelingt die Erzielung großer Längen eines Durchtrittskanals auf kleinstem Raum, wobei der spiralförmige Kanal in einer Ebene oder räumlich angeordnet sein kann. Die Heizeinrichtungen können unterschiedlicher Art sein, wobei lediglich darauf Bedacht zu nehmen ist, daß mit derartigen Heizeinrichtungen zumindest im Bereich des Durchtrittskanales bzw. der Durchtrittskanäle die geforderte Mindesttemperatur erreicht wird, welche ein Verglühen der Festkörper ermöglicht.

Mit Vorteil wird als Material für den Grundkörper faserarmiertes, keramisches bzw. pseudokeramisches Material, wie z.B. faserverstärktes SiC-B₄C, SiC-B, SiC-Si, SiC-BN, SiC-Si₃N₄, oder kohlefaserverstärkter Kohlenstoff (CFC) oder Graphit (CFG), gewählt. Es ist in diesem Zusammenhang von wesentlicher Bedeutung, daß das keramische bzw. pseudokeramische Material faserarmiert ist, um den geforderten Festigkeitseigenschaften, insbesondere den hohen Temperaturwechselbeanspruchungen, ohne Bruchgefahr standhalten zu können. Der Grundkörper kann dabei weiters aus hochtemperaturbeständigen und temperaturwechselfesten metallischen Materialien, beispielsweise hochtemperaturfesten Aluminiumlegierungen bestehen.

Eine besonders einfache, bevorzugte Ausgestaltung unter Ausbildung einer hinreichenden Länge des Durchtrittskanales zur Erzielung der gewünschten Endtemperaturen zum Verglühen von Festkörpern läßt sich dadurch verwirklichen, daß der Grundkörper aus einer Mehrzahl von scheibenförmigen Segmenten besteht, deren aneinander anliegende Flächen die Durchtrittskanäle begrenzen. Die Anordnung von Durchtrittskanälen an aneinander anliegenden Flächen derartiger scheibenförmiger Segmente ermöglicht unterschiedliche geometrische Konfigurationen der Kanäle, wodurch auf relativ kleinem Raum eine große Länge des jeweiligen Durchtrittskanales und damit eine hinreichende Verweilzeit für das Verglühen von Festkörpern sichergestellt werden kann. In besonders einfacher Weise kann bevorzugt eine Mehrzahl von Durchtrittskanälen vorgesehen ist, um auch größere Volumsströme sicher von Festkörpern zu reinigen.

Gemäß einer anderen bevorzugten Ausführungsform kann die Ausbildung so getroffen sein, daß der Grundkörper von einem in einem Hohlzylinder dichtend aufgenommenen Zylinder gebildet wird, wobei der Durchtrittskanal an der Mantelfläche des Zylinders in Form eines schraubenlinienförmigen Kanals ausgebildet ist, wobei diese Ausbildung mit wenigen Einzelteilen herstellbar ist und insbesondere bei annähernd konstanten Beladungsparametern des zu reinigenden Abgases einsetzbar ist. Durch entsprechende Bemessung des schraubenlinienförmigen Kanals läßt sich dabei eine große Länge des Durchtrittskanals in kompakter Form erzielen, so daß auch bei hohen Gasgeschwindigkeiten die Verweilzeit im Durchtrittskanal für ein vollständiges Verglühen der Festkörperteilchen ausreichend ist.

Die Heizeinrichtungen können in besonders einfacher Weise von im Durchtrittskanal angeordneten Widerstandsheizungen oder induktiven Heizungen oder Elektroden zur Ausbildung eines Hochspannungsfeldes gebildet sein. Induktive Heizungen bedingen auf Grund der geforderten hohen Temperaturen in der Regel einen relativ hohen Stromverbrauch und bei Verwendung von Widerstandsheizungen muß in Kauf genommen werden, daß mit derartigen Heizungen nicht nur der lichte Querschnitt der Durchtrittskanäle, sondern auch ein großer Teil des Grundkörpers konstant auf hohe Temperaturen erwärmt werden muß.

Bei entsprechend temperaturwechselfestem Material kann naturgemäß der erforderliche Energieaufwand dadurch minimiert werden, daß die gewünschte Heizleistung zur Erzielung von Temperaturen von über 1300°C, insbesondere über 1900°C, selektiv auf das die Durchtrittskanäle durchströmende Gas und die darin enthaltenen Festkörper zur Wirkung gebracht wird, was in einfacher Weise dadurch erzielt werden kann, daß im Durchtrittskanal Elektroden für den Aufbau eines Hochspannungsfeldes sowie wenigstens eine Induktionsspule für den Aufbau eines Hochfrequenzfeldes im Bereich des Durchtrittskanals vorgesehen sind. Bei einer derartigen Ausbildung wird der Großteil der zur Heizung aufgebrachten Energie unmittelbar zur Erhitzung der Festkörper im Gasstrom wirksam. Gemäß einer bevorzugten Ausführungsform ist die Ausbildung dabei so getroffen, daß die Induktionsspule die Elektroden umgibt, wodurch sich ein einfacher und platzsparender Aufbau ergibt, bei welchem mit geringem Energieaufwand das Auslangen gefunden werden kann.

Bei Ausbildung des hochtemperaturfesten und temperaturwechselfesten Grundkörpers aus den bevorzugten faserarmierten, keramischen oder pseudokeramischen bzw. metallischen Grundmaterialien können die Heizeinrichtungen bzw. Elektroden bevorzugt durch Aufdampfen, Sputtern oder Plasmabeschichten auf den Innenwänden des Durchtrittskanals aufgebracht werden.

Gemäß einer bevorzugten Ausführungsform ist die Ausbildung so getroffen, daß die im Inneren des Durchtrittskanales vorgesehenen Heizeinrichtungen bzw. Elektroden von einer Schutzschicht, insbesondere einer Quarzglasschicht, bedeckt sind, wodurch ein Schutz des Leiters der Heizeinrichtungen bzw. der Elektroden vor den abrasiven und/oder korrosiven Bestandteilen des zu reinigenden Gases gegeben ist.

Gemäß einer bevorzugten Ausführungsform ist die Ausbildung so getroffen, daß die Innenfläche des Durchtrittskanals Erhebungen, insbesondere pyramidenförmige oder halbkugelförmige Erhöhungen, aufweist, wodurch an der Innenfläche des Durchtrittskanals Prallflächen für die zu verglühenden Festkörper des Gasstromes gebildet werden, so daß neben der thermischen Beanspruchung eine mechanische Beanspruchung auf die Festkörper ausgeübt wird, wodurch die Verglühung bzw. Beseitigung der Festkörper beschleunigt wird. Durch das Vorsehen von derartigen Erhebungen bzw. Prallflächen kann somit die Länge des Durchtrittskanales gegenüber einer glatten Oberfläche verkürzt werden und insgesamt mit kleineren Bauteilen das Auslangen gefunden werden. Eine weitere Begünstigung des Verglühens durch eine gleichzeitige mechanische und thermische Beanspruchung ergibt sich bei einer Ausbildung, bei welcher die Innenfläche des Durchtrittskanals eine Oberflächenrauhigkeit aufweist, welche geringer ist als der durchschnittliche Durchmesser der Festkörper im Gasstrom, wie dies einer bevorzugten Ausführungsform entspricht.

Da der Grundkörper aus hochtemperaturfestem und temperaturwechselfestem Material, je nach verwendeter Heizeinrichtung unter Umständen zur Gänze die geforderten Temperaturen von über 1300°C, vorzugsweise über 1900°C, aufweisen kann, kann eine entsprechende Ummantelung des Grundkörpers vorgesehen sein. Gemäß einer bevorzugten Ausführungsform ist dabei die Ausbildung so getroffen, daß der Grundkörper in einem Gehäuse aus insbesondere hochtemperaturbeständigem Stahl und/oder Aluminium bzw. kohlefaserverstärktem Kohlenstoff (CFC) gelagert ist, und daß zwischen der Oberfläche des Grundkörpers und dem Gehäuse eine Kühlvorrichtung vorgesehen ist, wobei durch das Vorsehen einer Kühlvorrichtung zwischen der Oberfläche des Grundkörpers und dem Gehäuse sichergestellt wird, daß das Außengehäuse eine gegenüber dem Grundkörper stark verminderte Temperatur aufweist, welche bei einer Verwendung der erfindungsgemäßen Vorrichtung, beispielsweise im Zusammenhang mit einer Verbrennungskraftmaschine, nicht wesentlich über der Temperatur der übrigen erwärmten Bauteile liegt.

Um weiters lokale Überhitzungen im Grundkörper zu vermeiden, kann die Ausbildung mit Vorteil so getroffen sein, daß im Grundkörper, insbesondere dem (den) Durchtrittskanal (-kanälen) unmittelbar benachbart wenigstens ein Kühlkanal vorgesehen ist.

Für eine Regelung der durch die Vorrichtung strömenden Gasmenge ist die Ausbildung in besonders einfacher Weise so getroffen, daß an der Eintrittsseite des Durchtrittskanals, insbesondere aus dem Material des Grundkörpers ausgebildete, druckfeste und gasdichte Verschlußeinrichtungen, insbesondere regelbare Klappen oder Gasschleusen, vorgesehen sind, so daß einerseits Druckschwankungen im zuströmenden und/oder abströmenden Gasstrom ausgeglichen werden können und bei Verwendung von mehreren Durchtrittskanälen in einer gemeinsamen Vorrichtung unterschiedlichen Gasmengen durch teilweises Verschließen von Durchtrittskanälen derart Rechnung getragen werden kann, daß für eine vollständige Verglühung in einem Durchtrittskanal jeweils die optimalen Betriebsparameter eingestellt werden können. Gleichzeitig wird durch die Verschlußeinrichtungen ein Rückbrand beim Verglühen der Festkörper in Richtung des zuströmenden Gasstromes zur vorangehenden Verbrennungseinrichtung verhindert. Die Vorrichtung erlaubt es, brennbare Gase und/oder brennbare Festkörper im Durchtrittskanal abzubrennen, wobei der Flammrückschlag durch druckfestes Verschließen oder Gasschleusen an der Eintrittsseite, verhindert wird.

Das aus der Vorrichtung austretende und von Festkörpern gereinigte Gas weist im allgemeinen einen erhöhten Druck auf, welcher zur Förderung eines anderen Mediums oder Gas herangezogen werden kann. Zu diesem Zweck ist die Ausbildung in bevorzugter Weise so getroffen, daß an der Austrittsseite des Durchtrittskanals ein insbesondere aus Borcarbid bzw. Siliciumcarbid bestehendes Schaufelrad angeordnet ist, wobei mit diesem, insbesondere aus Borcarbid bzw. Siliciumcarbid bestehenden Schaufelrad in einfacher Weise ein zweites Rad gekoppelt und getrieben wird, welches ein Medium oder Gas, das nicht mit dem Gasstrom des Verglühers in Verbindung gelangen darf, fördert bzw. verdichtet oder zur Ausbildung eines Vakuumstromes herangezogen werden kann. Dieses geförderte bzw. verdichtete Gas kann auch in einfacher Weise zur Kühlung des Gehäuses des Grundkörpers herangezogen werden. Für einen Druckaufbau durch Verbrennung des behandelten Abgases im Durchtrittskanal können auch an der Austrittsseite Verschlußeinrichtungen, beispielsweise Klappen oder Schleusen, vorgesehen sein, um die Effizienz des nachgeschalteten Schaufelrades zu erhöhen. Insbesondere bei Durchführung einer Verbrennung im Durchtrittskanal kann dabei ein entsprechendes Drehmoment am Schaufelrad abgenommen werden.

Gemäß einer bevorzugten Ausführungsform ist die Ausbildung so getroffen, daß in den Durchtrittskanal eine Zuleitung zum Zudosieren gasförmiger und/oder fester Brennstoffe vorgesehen ist. Dadurch wird es möglich, optimale Betriebsbedingungen bzw. für eine Verbrennung geeignete stöchiometrische Verhältnisse für eine restlose Beseitigung bzw. ein irreversibles Aufbrechen von chemischen Verbindungen bei einem im Durchtrittskanal stattfindenden Verbrennungsprozeß einzustellen.

Für eine einfache Regelung des Gasdurchsatzes durch die erfindungsgemäße Vorrichtung ist die Ausbildung in einfacher Weise so getroffen, daß an der Eintrittsseite des Durchtrittskanals Sensoren zur Erfassung der Temperatur und/oder des Druckes und/oder der Gasgeschwindigkeit und/oder des Festkörpergehaltes des Gases angeordnet sind, wobei bevorzugt so vorgegangen wird, daß die Sensoren mit einer Auswerteeinheit verbunden sind, welche über Steuerleitungen mit Antrieben für die Verschlußeinrichtungen und/oder mit Regeleinrichtungen für die Energiezufuhr zu den Heizeinrichtungen verbunden ist. Auf diese Weise wird es möglich, einerseits die Temperatur im Durchtrittskanal dem festgestellten Festkörpergehalt bzw. der Art der Festkörper anzupassen als auch die für eine optimale Betriebsweise entsprechenden Parameter, wie Gasdurchsatz und Gasdruck, in den Durchtrittskanälen einzustellen. Als Sensoren können dabei bekannte mechanische, optische, elektrische oder elektronische Detektoren verwendet werden.

Die erfindungsgemäße Vorrichtung zum Verglühen von Festkörpern in einem Gasstrom, insbesondere von Ruß aus Abgasen, kann hiebei bevorzugt so ausgebildet sein, daß das Material des Grundkörpers in Fraktionen von kleiner 0,6 µm, von 0,6 bis 1,8 µm und von 4,0 bis 4,5 µm durchschnittliche Korngröße getrennt ist, daß eine Mischung mit 5 bis 15%, insbesondere 10%, der kleinsten Fraktion, mit 25 bis 35%, insbesondere 30%, der mittleren Fraktion, Rest der größten Fraktion gegebenenfalls unter Zugabe von Armierungsfasern eingestellt ist, und daß nach einer Vorverdichtung ein hydraulisches Pressen bei gleichzeitigem Sintern unter erhöhter Temperatur, gegebenenfalls unter Schutzgasatmosphäre erfolgt. Liegt das zur Herstellung des Grundkörpers verwendete hochtemperaturfeste und temperaturwechselfeste Material in Pulverform mit wesentlich größeren Korngrößen vor, muß dieses in wenigstens einem Mahlvorgang bzw. Zerstäubungsvorgang entsprechend zerkleinert werden. Die erfindungsgemäß vorgeschlagene Sichtung in Fraktionen oder deren Definition mit einer durchschnittlichen Korngröße von kleiner als 0,6 µm, von 0,6 bis 1,8 µm und von 4,0 bis 4,5 µm mit dem oben bezeichneten Mischungsverhältnis erlaubt dabei eine im wesentlichen fehlstellenfreie Erzeugung des Grundkörpers mit einer Dichte von mindestens 99% der theoretischen Dichte und einer feinkristallinen Struktur, welche erst die geforderten Festigkeitseigenschaften aufweist.

Für die weitere Verbesserung der Festigkeitseigenschaften des Grundkörpers wird das Material vorzugsweise derart ausgewählt, daß ein SiC-Faseranteil von 20 bis 30 Vol.-%, vorzugsweise 27 Vol.-%, bei einem Dicke:Länge-Verhältnis der Fasern von größer als 1:60, vorzugsweise größer als 1:85, und 0,3 bis 5,0 % ZrO₂ in der Fraktion kleiner 0,6 µm der Mischung zugesetzt ist. Die keramischen Fasern behindern dabei die Rißausbildung im fertiggestellten Grundkörper beachtlich und erhöhen die Bruchzähigkeit, wobei durch die Zugabe eines Faseranteiles von 20 bis 30 Vol.-%, vorzugsweise 27 Vol.-%, mit einem entsprechend hohen Schlankheitsgrad bzw. Dicke : Länge - Verhältnis der Fasern eine Erhöhung der Bruchzähspannung um 25 % erzielt werden kann.

Gemäß einer bevorzugten Ausführungsform erfolgt die Vorverdichtung auf eine Dichte von 60 bis 70%, vorzugsweise von 65 bis 69%, der theoretischen Dichte, wobei diese Vorverdichtung beispielsweise durch niederfrequente Formrüttlung und hochfrequente Beschallung unter gleichzeitiger Verdichtung vorgenommen werden kann. Die Vorverdichtung wird dabei bereits in Formen durchgeführt, welche für das nachfolgende hydraulische Pressen bei gleichzeitigem Sintern unter erhöhter Temperatur geeignet sind.

Für die Einstellung der erforderlichen Festigkeitswerte und zur Erzielung einer Enddichte von mehr als 99% der theoretischen Dichte erfolgt das Verpressen bei gleichzeitigem Sintern unter einem hydraulischen Druck von über 200 kN/cm² und einer Temperatur von über 2100°C. Bevorzugt erfolgt die thermische Nachbehandlung unter Beibehaltung des während des Verpressens herrschenden Druckes. Unter Beibehaltung des gewünschten Preßdruckes, wird eine Verspannvorrichtung, die um das Preßwerkzeug angeordnet ist, so fixiert, daß eine Entnahme des Preßwerkzeuges mit der Verspannvorrichtung aus der Heißpresse möglich ist, um sie einer thermischen Nachbehandlung zuzuführen, ohne den Formendruck zu reduzieren. Die Heißpresse steht nach dem beschriebenen Fertigungsprozeß für einen kontinuierlichen Preßzyklus wiederum zur Verfügung, während die im allgemeinen zeitaufwendige thermische Nachbehandlung getrennt vorgenommen wird.

Der erfindungsgemäße Grundkörper kann Temperaturbelastungen und schnellen bis schockartigen Temperaturwechselbelastungen zwischen -60°C bis etwa 2000°C in einer Zeit von 20 s und einem atmosphärischen Druck bis einem Überdruck von 250 bar und darüber bei wechselnden und schockartigen Temperaturbelastungen ausgesetzt werden. Weiters wird ermöglicht, die Vorrichtung hohen Gasströmungen, bevorzugt zwischen 50 bis 80 m/s, und damit abrasiven Bedingungen durch die vom Gasstrom getragenen Festkörper bis zu den genannten Drücken in dem großen Temperaturbereich auszusetzen. Um ein besonders feinkristallines Gefüge der gesinterten Keramikteile zu erreichen muß nach dem Sintervorgang eine besondere Druck- und Temperaturführung eingehalten werden.

Bevorzugt sind für den Grundkörper der erfindungsgemäßen Vorrichtung beim Aufheizen in der hydraulischen Presse wenigstens drei Temperaturhaltestufen, insbesondere bei Temperaturen von etwa 180°C, 760° und 1800°C über wenigstens 10 Minuten, eingehalten, wobei insbesondere nach der Entgasungsphase ein linearer Druckanstieg beim Druckaufbau in der Heißpresse eingehalten ist, um die geforderte Temperaturwechselfestigkeit des Materials des Grundkörpers durch Ausbildung eines entsprechenden Materialgefüges zu erhalten.

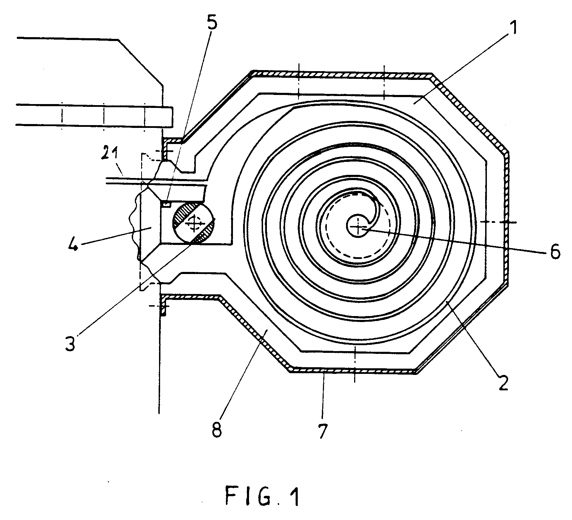

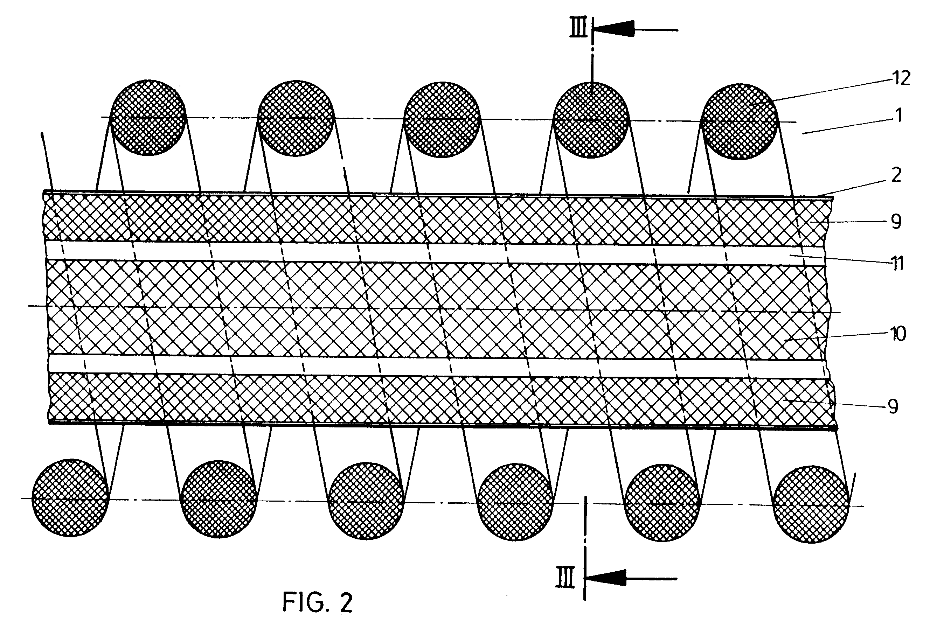

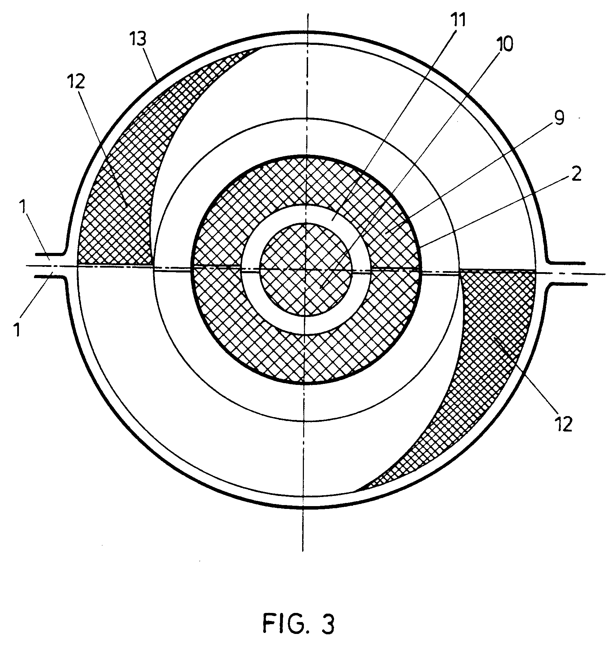

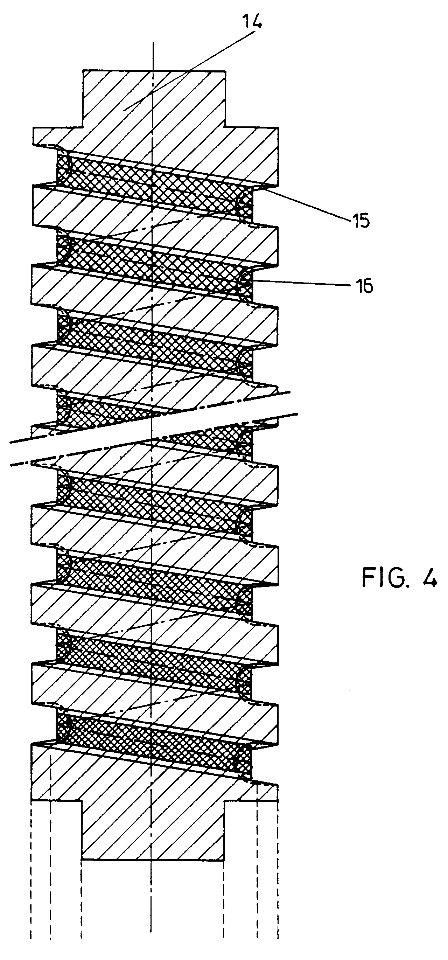

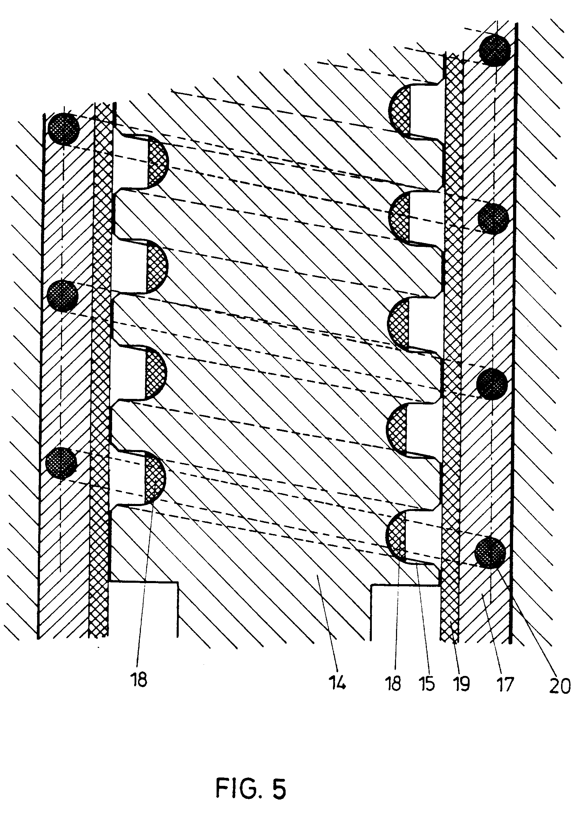

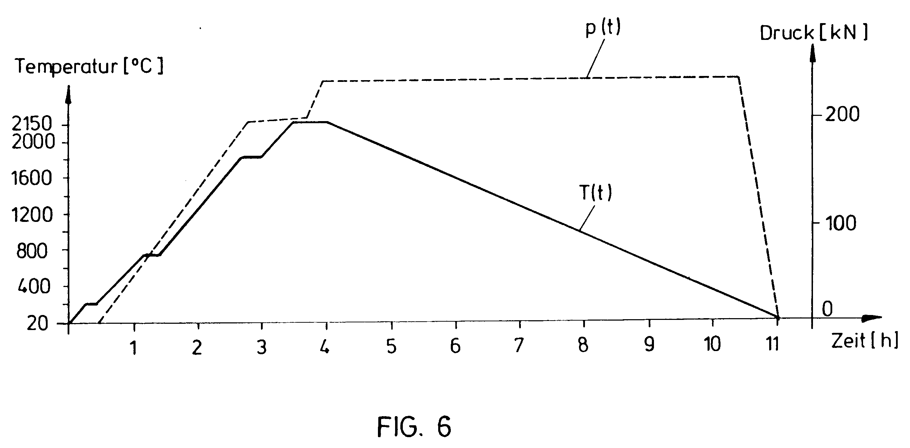

Die Erfindung wird nachfolgend an Hand von in der Zeichnung dargestellten Ausführungsbeispielen beschrieben. In dieser zeigen Fig.1 einen Schnitt durch den Grundkörper einer ersten Ausführungsform einer erfindungsgemäßen Vorrichtung im Bereich eines Durchtrittskanales; Fig.2 in stark vergrößerter Darstellung einen Teilbereich des Durchtrittskanals gemäß Fig.1 mit Heizeinrichtungen; Fig.3 einen Schnitt nach der Linie III-III der Fig.2; Fig.4 eine Ansicht auf eine zweite Ausführungsform einer erfindungsgemäßen Vorrichtung mit einem an einem Zylinder vorgesehenen Durchtrittskanal; Fig.5 in vergrößerter Darstellung einen teilweisen Schnitt längs einer die Längsachse enthaltenden Ebene der Ausbildung gemäß Fig.4; Fig.6 zeigt eine Druck-Temperatur-Zeit-Diagramm zur Durchführung des erfindungsgemäßen Verfahrens.

In Fig.1 ist mit l ein Segment eines Grundkörpers aus hochtemperaturzestem und temperaturwechselfestem Material bezeichnet, welches einen im wesentlichen in einer Ebene spiralförmig verlaufenden Kanal 2 aufweist. Der Kanal 2 weist an seiner Eintrittsseite eine regelbare Gasschleuse 3 auf, welche eine Verbindung zwischen einem Stauraum 4 und der Spirale 2 herstellt. Durch Verdrehen der Gasschleuse kann dabei der Durchsatz durch die Spirale entsprechend den Erfordernissen eingestellt werden oder ein Gasdurchtritt vollkommen ausgeschlossen werden. Vor der Gasschleuse ist an der Eintrittsseite des Kanales ein Sensor 5 zur Erfassung der Temperatur und/oder des Druckes und/oder der Gasgeschwindigkeit und/oder des Festkörpergehaltes des Gases schematisch angedeutet, wobei in nicht näher dargestellter Weise der Sensor bzw. bei mehreren Durchtrittskanälen die Sensoren mit einer Auswerteeinheit verbunden werden, welche einerseits mit den Antrieben der Gasschleuse 3 und andererseits mit den Regeleinrichtungen für die Energiezufuhr zu den Heizeinrichtungen verbunden ist. Die Heizeinrichtung wird dabei beispielsweise von an der Innenfläche der Spirale bzw. des Durchtrittskanales 2 aufgebrachten Leitern gebildet, welche in einer Schichtstärke von 1 µm bis 10 mm und bevorzugt von 1 µm bis 500 µm vorgesehen sind. Diese Heizelemente sind dabei in Fig.1 der Deutlichkeit halber nicht dargestellt. Nach dem Durchtritt durch den Kanal bzw. die Spirale 2 verläßt das Gas den Grundkörper 1 über eine zentral angeordnete Durchbrechung 6, wobei in diesem Austrittskanal neben einer Austrittsschleuse ein Schaufelrad zur Förderung oder Verdichtung eines anderen Mediums vorgesehen sein kann. Der Grundkörper 1 wird dabei von einem Gehäuse 7 aus insbesondere hochtemperaturbeständigem Stahl und/oder Aluminium bzw. CFC umgeben, wobei in dem Zwischenraum 8 zwischen dem Grundkörper 1 und dem Gehäuse 7 eine nicht näher dargestellte Kühlvorrichtung vorgesehen ist. In Fig.1 ist weiters eine Zuleitung 21 zum Zudosieren von gasförmigen und/oder festen Brennstoffen in den Durchtrittskanal 2 dargestellt, um bei einer im Durchtrittskanal 2 stattfindenden Verbrennung durch entsprechende Beimengung von Brennstoffen für eine rückstandsfreie Verbrennung geeignete Betriebsbedingungen aufrechterhalten bzw. einstellen zu können. In der Zuleitung 21 sind dabei nicht näher dargestellte Regeleinrichtungen, z.B. Ventile, vorgesehen, welche ebenso wie die oben erwähnten Antriebe oder Regelungseinrichtungen in Abhängigkeit von den durch die Sensoren 5 festgestellten Gasparameter gesteuert werden können.

Der in Fig.1 dargestellte Bauteil wird in einfacher Weise als scheibenförmiges Segment aus faserarmiertem, keramischem bzw. metallischem Material hergestellt, worauf durch ein Zusammenfügen von zwei spiegelgleichen Segmenten jeweils ein Durchtrittskanal bzw. eine Spirale 2 gebildet wird, wie dies aus Fig.3 deutlich ersichtlich wird. Durch ein Nebeneinanderreihen einer Vielzahl von Segmenten wird insgesamt eine Vorrichtung geschaffen, welche entsprechend den anfallenden Gasmengen eine Mehrzahl von gleich ausgebildeten, nebeneinander liegenden und voneinander getrennten Durchtrittskanälen aufweist, wobei der Stauraum 4 und der durchgehende Kanal 6 für das austretende und vorzugsweise von Festkörpern befreite Gas in einfacher Weise für sämtliche Einzelelemente gemeinsam ausgebildet ist.

Bei dem in Fig.2 dargestellten kurzen Teilbereich des Durchtrittskanales 2 im Grundkörper 1 aus hochtemperaturfestem und temperaturwechselfestem Material ist eine Möglichkeit für die Heizeinrichtungen zur Erzielung der Temperaturen von über 1300°C, vorzugsweise über 1900°C zum restlosen Verglühen vorzugsweise von Festkörpern in dem durch den Durchtrittskanal 2 durchgeleiteten Gasstrom bzw. zum Aufbrechen von darin enthaltenen chemischen Verbindungen dargestellt. Dabei ist der Durchtrittskanal mit zwei Elektroden 9 und 10 versehen, welche zusammen ein Hochspannungsfeld im verbleibenden Durchtrittsquerschnitt 11 aufbauen, welches beispielsweise in der Größenordnung von 80 kV und höher liegen kann. Weiters kann im Material des Grundkörpers eine Induktionsspule 12 zum Aufbau eines Hochfrequenzfeldes angeordnet sein, so daß durch die Kombination des zwischen den Elektroden 9 und 10 aufgebauten Hochspannungsfeldes mit dem durch die Spule 12 induzierten Hochfrequenzfeld ein Verglühen der Teilchen bzw. ein Aurbrechen von chemischen Verbindungen erfolgt. Eine derartige Ausbildung der Heizeinrichtung ermöglicht dabei, die eingesetzte Energie zum Großteil nur zum Aufheizen des Gases einzusetzen, während der umgebende Grundkörper wesentlich unter den gewünschten Temperaturen von über 1300°C, bzw. über 1900°C verbleibt.

Die Aufbringung der an der Innenfläche des Durchtrittskanales 2 vorgesehenen Elektrode 9 erfolgt dabei beispielsweise mittels Sputtern, Ausscheidung aus der Dampfphase, Plasmabeschichtung, Aufspritzen aus der Schmelze und/oder der Lösung eines geeigneten, insbesondere metallischen, elektrischen Leiters, wobei Zwischenschichten als Haftvermittler vorgesehen sein können, welche der Deutlichkeit halber jedoch nicht dargestellt sind. Die Dicke der Zwischenschichten beträgt dabei entsprechend den Erfordernissen etwa 0,5 bis 20 µm. Zum Schutz der Elektroden 9 und 10 ist auf diesen eine Schutzschicht, insbesondere eine Quarzglasschicht aufgebracht, um die elektrischen Leiter vor Abrasion bzw. Korrosion durch den zu reinigenden Abgasstrom zu schützen, wobei die Dicke insbesondere im Hinblick auf die Aufrechterhaltung eines ausreichend hohen Hochspannungsfeldes bemessen ist. Die Innenfläche des Durchtrittskanals 2 und somit auch der aufgebrachten Elektrode 9 kann dabei Erhebungen zur Ausbildung von Prallflächen für die zu verglühenden Festkörper aufweisen, so daß neben der thermischen Beanspruchung auch eine mechanische Beanspruchung auf die Festkörper bzw. Rußteilchen im Gasstrom ausgeübt wird, so daß die Länge des Durchtrittskanales für ein restloses Verglühen entsprechend verringert werden kann. Dabei ist weiters die Oberflächenrauhigkeit derart gewählt, daß sie geringer ist als der durchschnittliche Durchmesser der Festkörper im Gasstrom. Die derart von einer glatten Oberfläche abweichende Ausbildung der Innenfläche des Durchtrittskanales ist hiebei der Deutlichkeit halber in Fig.2 nicht dargestellt.

Anstelle der Elektroden zum Aufbau eines Hochspannungsfeldes kann eine Heizeinrichtung auch in einfacher Weise von einer im Durchtrittskanal vorgesehenen Widerstandsheizung gebildet sein, wobei anstelle der Elektrode 9 am Innenumfang des Durchtrittskanales 2 eine Widerstandsheizung ähnlich dem Aufbringen der Elektrode 9 aufgebracht wird. Bei einer derartigen Ausbildung einer Heizung mit einer an der Innenfläche des Durchtrittskanales 2 vorgesehenen Widerstandsheizung entfällt naturgemäß die Elektrode 10. Zur Vermeidung von partiellen Überhitzungen des Grundkörpers kann dabei im Bereich des Durchtrittskanales eine Kühleinrichtung vorgesehen sein, wobei diese ähnlich der Induktionsspule 12 im Grundkörper durch Ausbildung eines Kanales für den Durchtritt eines Kühlmediums ausgebildet sein kann.

Bei der Darstellung gemäß Fig.3 ist deutlich die zentrische Anordnung der Elektroden 9 und 10 im Inneren des Durchtrittskanales 2 sowie der in das keramische Material eingebetteten Induktionsspule 12 ersichtlich. Der Durchtrittsquerschnitt für das zu reinigende Gas ist dabei wiederum mit 11 bezeichnet. In Fig.3 ist angedeutet, daß bei der Herstellung eines in Fig.1 dargestellten Segmentes des Grundkörpers 1 zuerst eine dem Verlauf des Durchtrittskanales 2 entsprechende Ausnehmung mit größeren Abmessungen im Grundkörper 1 vorgesehen ist, deren Begrenzung durch die Linie 13 ersichtlich ist. In dieser Ausnehmung wird darauf die geteilte Induktionsspule positioniert bzw. eine Form zum Einbringen des Induktionsspulenmaterials ausgebildet, worauf nach der Positionierung der Induktionsspule bzw. der Induktionsspulenhälften 12 der Durchtrittskanal 2 durch ein Einbringen von dem Material des übrigen Grundkörpers entsprechendem Material in die Ausnehmung 13 der Durchtrittskanal 2 ausgebildet wird. Nach der Anbringung der Elektroden 9 und 10 bzw. einer Widerstandsheizung an der Innenfläche des Durchtrittskanales 2 wird durch ein druckfestes, dichtes Verbinden zweier spiegelsymmetrisch ausgebildeter Segmente der im Inneren des Grundkörpers verlaufende, geschlossene Durchtrittskanal 2 ausgebildet, wobei insbesondere an den Verbindungsstellen der Elektroden und gegebenenfalls der Induktionsspule für einen ausreichenden elektrischen Kontakt gesorgt werden muß.

In Fig.4 ist ein Zylinder 14 aus hochtemperaturfestem und temperaturwechselfestem, keramischen bzw. pseudokeramischen Material bzw. entsprechend temperaturbeständigen Legierungen dargestellt, an dessen Mantelfläche eine schraubenlinienförmige Ausnehmung 15 vorgesehen ist, welche den lichten Querschnitt des Durchtrittskanales zum Verglühen der Festkörper bzw. zum Aufbrechen der chemischen Verbindungen im Gasstrom darstellt. Bei Ausbildung von Heizeinrichtungen als Widerstandsheizung ist dabei in einfacher Weise an der Innenfläche des Durchtrittskanales 15 eine entsprechende Widerstandsheizung vorgesehen, wie sie mit 16 bezeichnet ist. Entsprechend den Anforderungen bzw. den anfallenden Gasmengen wird dabei der Querschnitt des Durchtrittskanales 15 sowie die Länge und der Durchmesser des Zylinders 14 und damit die Länge des Durchtrittskanales 15 bemessen. Analog wie bei der Ausbildung gemäß Fig.1 kann an der Gaseintrittsseite eine entsprechende Verschlußeinrichtung in Form regelbarer Klappen oder Gasschleusen ebenso wie ein gemeinsamer Stauraum für eine Mehrzahl von parallel geschalteten Vorrichtungen 14 vorgesehen sein. Ebenso kann das Gas nach dem Durchtritt durch den Durchtrittskanal beispielsweise über ein Schaufelrad zur teilweisen Energierückgewinnung geführt sein. Der an der Mantelfläche des Zylinders 14 vorgesehene Durchtrittskanal wird dabei durch einen über dem Zylinder 14 dichtend angeordneten Hohlzylinder begrenzt, wie dies aus Fig.5 deutlich ersichtlich ist.

In Fig.5 ist der den Zylinder 14 mit dem Durchtrittskanal 15 aufnehmende Hohlzylinder mit 17 bezeichnet. An der Innenfläche des Durchtrittskanales 15 ist abweichend von der Darstellung gemäß Fig.4 in Analogie zu der Heizeinrichtung der Fig.2 und 3 eine Elektrode 18 vorgesehen, welche mit einer an der Innenfläche des Hohlzylinders 17 aufgebrachten Elektrode 19 wiederum zur Ausbildung eines Hochspannungsfeldes vorgesehen ist. Zur Ausbildung eines Hochfrequenzfeldes ist eine den Zylinder 14 konzentrisch umgebende Induktionsspule 20 im Hohlzylinder 17 eingebettet. Der Hohlzylinder 17 umgibt dabei den Zylinder 14 in dichtender Weise, wobei bis zu Drücken von 250 bar und darüber eine dichte Verbindung aufrechterhalten wird. Die dem Gasstrom ausgesetzten Oberflächen der Elektroden 18 und 19 bzw. der in Fig.4 dargestellten Widerstandsheizung sind dabei wiederum mit einer entsprechenden Schutzschicht gegen Abrasion bzw. Korrosion geschützt. Die Bemessung und Formgebung der den Durchtrittskanal ausbildenden schraubenlinienförmigen Ausnehmung 15 an der Mantelfläche des Zylinders 14 erfolgt dabei unter Berücksichtigung der charakteristischen Parameter des Gasstromes sowie zur Erzielung geeigneter Elektrodenkonfigurationen zum Aufbau eines entsprechenden Hochspannungs- bzw. Hochfrequenzfeldes und kann dabei, wie in Fig.5 dargestellt, im wesentlichen U-förmig ausgebildet sein. Es können jedoch auch im wesentlichen rechteckige oder sinusförmige Querschnittsformen für die Ausnehmung 15 vorgesehen sein.

Bei Ausbildung einer Widerstandsheizung 16 der Fig.4 kann dabei eine Kühleinrichtung analog zur Anordnung der Induktionsspule in Fig.5 im Hohlzylinder 17 eingebettet werden, um partielle Überhitzungen im Grundkörper nahe dem Durchtrittskanal 15 zu vermeiden.

Der in den Fig.4 und 5 vom Hohlzylinder 17 und dem Zylinder 14 ausgebildete Grundkörper wird dabei ähnlich der Ausbildung gemäß Fig.1 in einem entsprechende Gehäuse aufgenommen, wobei wiederum Kühleinrichtungen vorgesehen sein können.

In Fig.6 ist die Temperaturführung als durchgehende Linie und die Druckführung als gestrichelte Linie dargestellt.

Die Temperatur der Heißpresse wird von Raumtemperatur innerhalb von etwa 12 Minuten auf 180°C gefahren. Bei 180°C wird die Temperatur 10 bis 12 Minuten gehalten. Mit Beginn des Heizzyklus wird ein Vakuum von 10⁻⁵ bar in der Sinterform angelegt, um störende Aerosole und flüchtige Bestandteile aus dem Grünling zu isolieren. Nach der Formentgasung wird auf Schutzgasspülung umgestellt. Die Temperatur wird innerhalb von 36 bis 40 Minuten von 180°C auf etwa 760°C angehoben. Diese Temperatur wird ebenfalls etwa 10 bis 12 Minuten gehalten. Danach wird die Temperatur innerhalb von etwa 72 Minuten auf 1800°C angehoben. Diese Temperatur wird etwa 20 bis 24 Minuten gehalten. Danach wird die Temperatur innerhalb von 24 bis 30 Minuten auf 2150°C angehoben. Diese Temperatur ist 26 bis 32 Minuten zu halten. Danach wird das Formwerkzeug mit der Verspannvorrichtung aus der Heißpresse entnommen. Das Formwerkzeug mit Verspannvorrichtung wird zur weiteren thermischen Behandlung in einem Temperraum verbracht. Die strichliert dargestellte Druckführung der Heißpresse wird dabei so ausgelegt, daß in der Entgasungsphase ein Druck von 0,2 kN nicht überschritten wird. Danach wird der Druck linear auf 210 kN gesteigert. Der Druckanstieg erfolgt parallel zur Temperaturkurve. Vor Entnahme der Form aus der Presse wird der Druck auf 240 kN erhöht. Die Verspannvorrichtung wird danach fixiert und somit der Druck während der gesamten außerhalb der Presse durchgeführten Temperaturbehandlung aufrecherhalten und die Vorrichtung entnommen.

## Patentansprüche

1. Vorrichtung zum Verglühen von Festkörpern und Brechen von chemischen Verbindungen in einem Gasstrom, insbesondere zur Beseitigung von Ruß aus Abgasen, dadurch gekennzeichnet, daß ein aus hochtemperaturfestem und temperaturwechselfestem Material bestehender Grundkörper (1,14) mit wenigstens einem Durchtrittskanal (2,15) für den Gasstrom ausgebildet ist, daß der Durchtrittskanal (2,15) als im wesentlichen spiralförmiger Kanal ausgebildet ist und daß der Grundkörper (1,14) mit Heizeinrichtungen (9,10,12,18,19,20) zur Erzielung von Temperaturen über 1300°C, vorzugsweise über 1900°C, versehen ist.

2. Vorrichtung nach Anspruch 1, dadurch gekennzeichnet, daß der Grundkörper (1,14) aus faserarmiertem, keramischen bzw. pseudokeramischen Material, wie z.B. faserverstärktem SiC-B₄C, SiC-B, SiC-Si, SiC-BN, SiC-Si₃Na, oder kohlefaserverstärktem Kohlenstoff oder Graphit, besteht.

3. Vorrichtung nach Anspruch 1 oder 2, dadurch gekennzeichnet, daß eine Mehrzahl von Durchtrittskanälen (2,15) vorgesehen ist.

4. Vorrichtung nach Anspruch 1, 2 oder 3, dadurch gekennzeichnet, daß der Grundkörper (1) aus einer Mehrzahl von scheibenförmigen Segmenten besteht, deren aneinander anliegende Flächen die Durchtrittskanäle (2) begrenzen.

5. Vorrichtung nach Anspruch 1 oder 2, dadurch gekennzeichnet, daß der Grundkörper von einem in einem Hohlzylinder (17) dichtend aufgenommenen Zylinder (14) gebildet wird, wobei der Durchtrittskanal (15) an der Mantelfläche des Zylinders (14) in Form eines schraubenlinienförmigen Kanals (15) ausgebildet ist.

6. Vorrichtung nach einem der Ansprüche 1 bis 5, dadurch gekennzeichnet, daß die Heizeinrichtung (9,10,12,18,19,20) von im Durchtrittskanal (2,15) angeordneten Widerstandsheizungen oder induktiven Heizungen oder Elektroden zur Ausbildung eines Hochspannungsfeldes gebildet ist.

7. Vorrichtung nach einem der Ansprüche 1 bis 6, dadurch gekennzeichnet, daß im Durchtrittskanal (2,15) Elektroden (9,10,18,19) für den Aufbau eines Hochspannungsfeldes sowie wenigstens eine Induktionsspule (12,20) für den Aufbau eines Hochfrequenzfeldes im Bereich des Durchtrittskanals vorgesehen sind.

8. Vorrichtung nach Anspruch 7, dadurch gekennzeichnet, daß die Induktionsspule (20) die Elektroden (18,19) umgibt.

9. Vorrichtung nach Anspruch 6, 7 oder 8, dadurch gekennzeichnet, daß die Heizeinrichtungen bzw. Elektroden (9,19,18,19) durch Aufdampfen, Sputtern oder Plasmabeschichten auf den Innenwänden des Durchtrittskanals (2,15) aufgebracht sind.

10. Vorrichtung nach einem der Ansprüche 6 bis 9, dadurch gekennzeichnet, daß die im Inneren des Durchtrittskanals (2,15) vorgesehenen Heizeinrichtungen bzw. Elektroden (9,10, 18,19) von einer Schutzschicht, insbesondere einer Quarzglasschicht, bedeckt sind.

11. Vorrichtung nach einem der Ansprüche 1 bis 10, dadurch gekennzeichnet, daß die Innenfläche des Durchtrittskanals (2,15) Erhebungen, insbesondere pyramidenförmige oder halbkugelförmige Erhöhungen, aufweist.

12. Vorrichtung nach einem der Ansprüche 1 bis 11, dadurch gekennzeichnet, daß die Innenfläche des Durchtrittskanals (2,15) eine Oberflächenrauhigkeit aufweist, welche geringer ist als der durchschnittliche Durchmesser der Festkörper im Gasstrom.

13. Vorrichtung nach einem der Ansprüche 1 bis 12, dadurch gekennzeichnet, daß der Grundkörper (1) in einem Gehäuse (7) aus insbesondere hochtemperaturbeständigem Stahl und/oder Aluminium bzw. kohlefaserverstärktem Kohlenstoff gelagert ist, und daß zwischen der Oberfläche des Grundkörpers (1) und dem Gehäuse (7) eine Kühlvorrichtung (8) vorgesehen ist.

14. Vorrichtung nach einem der Ansprüche 1 bis 13, dadurch gekennzeichnet, daß im Grundkörper (1,14), insbesondere dem (den) Durchtrittskanal (2,15) (-kanälen) unmittelbar benachbart wenigstens ein Kühlkanal vorgesehen ist.

15. Vorrichtung nach einem der Ansprüche 1 bis 14, dadurch gekennzeichnet, daß an der Eintrittsseite (4) des Durchtrittskanals (2) insbesondere aus dem Material des Grundkörpers (1) ausgebildete druckfeste und gasdichte Verschlußeinrichtungen (3), insbesondere regelbare Klappen oder Gasschleusen, vorgesehen sind.

16. Vorrichtung nach einem der Ansprüche 1 bis 15, dadurch gekennzeichnet, daß an der Austrittsseite (6) des Durchtrittskanals (2) ein insbesondere aus Borcarbid bzw. Siliciumcarbid bestehendes Schaufelrad angeordnet ist.

17. Vorrichtung nach einem der Ansprüche 1 bis 16, dadurch gekennzeichnet, daß in den Durchtrittskanal (2) eine Zuleitung (21) zum Zudosieren gasförmiger und/oder fester Brennstoffe vorgesehen ist.

18. Vorrichtung nach einem der Ansprüche 1 bis 17, dadurch gekennzeichnet, daß an der Eintrittsseite (4) des Durchtrittskanals (2) Sensoren (5) zur Erfassung der Temperatur und/oder des Druckes und/oder Gasgeschwindigkeit und/oder des Festkörpergehaltes des Gases angeordnet sind.

19. Vorrichtung nach Anspruch 18, dadurch gekennzeichnet, daß die Sensoren (5) mit einer Auswerteeinheit verbunden sind, welche über Steuerleitungen mit Antrieben für die Verschlußeinrichtungen (3) und/oder mit Regeleinrichtungen für die Energiezufuhr zu den Heizeinrichtungen (9,10,12,18,19,20) verbunden ist.

20. Vorrichtung nach einem der Ansprüche 1 bis 19, dadurch gekennzeichnet, daß das Material des Grundkörpers in Fraktionen von kleiner 0,6 µm, von 0,6 bis 1,8 µm und von 4,0 bis 4,5 µm durchschnittliche Korngröße getrennt ist, daß eine Mischung mit 5 bis 15%, insbesondere 10%, der kleinsten Fraktion, mit 25 bis 35%, insbesondere 30%, der mittleren Fraktion, Rest der größten Fraktion gegebenenfalls unter Zugabe von Armierungsfasern eingestellt ist, und daß nach einer Vorverdichtung ein hydraulisches Pressen bei gleichzeitigem Sintern unter erhöhter Temperatur, gegebenenfalls unter Schutzgasatmosphäre erfolgt.

21. Vorrichtung nach Anspruch 20, dadurch gekennzeichnet, daß ein SiC-Faseranteil von 20 bis 30 Vol.-%, vorzugsweise 27 Vol.-%, bei einem Dicke:Länge-Verhältnis der Fasern von größer als 1:60, vorzugsweise größer als 1:85, und 0,3 bis 5,0 % ZrO₂ in der Fraktion kleiner als 0,6 µm der Mischung zugesetzt ist.

22. Vorrichtung nach Anspruch 20 oder 21, dadurch gekennzeichnet, daß die Vorverdichtung auf eine Dichte von 60 bis 70%, vorzugsweise von 65 bis 69%, der theoretischen Dichte erfolgt.

23. Vorrichtung nach Anspruch 20, 21 oder 22, dadurch gekennzeichnet, daß das Verpressen bei gleichzeitigem Sintern unter einem hydraulischen Druck von über 200 kN/cm² und einer Temperatur von über 2100°C erfolgt.

24. Vorrichtung nach einem der Ansprüche 20 bis 23, dadurch gekennzeichnet, daß die thermische Nachbehandlung unter Beibehaltung des während des Verpressens herrschenden Druckes erfolgt.

25. Vorrichtung nach einem der Ansprüche 20 bis 24, dadurch yekennzeichnet, daß beim Aufheizen in der hydraulischen Presse wenigstens drei Temperaturhaltestufen, insbesondere bei Temperaturen von etwa 180°C, 760°C und 1800°C über wenigstens 10 Minuten, eingehalten sind.

26. Vorrichtung nach einem der Ansprüche 20 bis 25, dadurch gekennzeichnet, daß nach der Entgasungsphase ein linearer Druckanstieg beim Druckaufbau in der Heißpresse eingehalten ist.

## Claims

1. A device for burning up solids and breaking chemical bonds in a gas flow, in particular for removing soot from exhaust gases, characterized in that a base body (1, 14) is formed with at least one passage duct (2, 15) for the gas flow and consisting of a high temperature resistant and temperature shock resistant material; that the passage duct (2, 15) is designed as a substantially spiral-shaped duct; and that the base body (1, 14) is provided with heating appliances (9, 10, 12, 18, 19, 20) for attaining temperatures of over 1300°C, preferably over 1900°C.

2. A device according to claim 1, characterized in that the base body (1, 14) consists of a fibre-reinforced ceramic or pseudo-ceramic material, as for example, fibre-reinforced SiC-B₄C, SiC-B, SiC-Si, SicC-BN, SiC-Si₃Na, or carbon fibre-reinforced carbon or graphite.

3. A device according to claim 1 or 2, characterized in that provision is made for a plurality of passage ducts (2, 15).

4. A device according to claim 1, 2, or 3, characterized in that the base body (1) consists of a plurality of disk-shaped segments whose faces adjoining each other delimit the passage ducts (2).

5. A device according to claim 1 or 2, characterized in that the base body is formed by a cylinder (14) accommodated with a seal in a hollow cylinder (17), wherein the passage duct (15) is formed on the lateral surface of the cylinder (14) in the form of a helical duct (15).

6. A device according to one of claims 1 to 5, characterized in that the heating appliance (9, 10, 12, 18, 19, 20) is formed by heating resistors arranged in the passage duct (2, 15), or inductive heaters or electrodes for forming a high-voltage field.

7. A device according to one of claims 1 to 6, characterized in that in the passage duct (2, 15) provision is made for electrodes (9, 10, 18, 19) for building up a high voltage field, as well as at least one inductance coil (12, 20) for building up a high frequency field in the zone of the passage duct.

8. A device according to claim 7, characterized in that the inductance coil (20) surrounds the electrodes (18, 19).

9. A device according to claim 6, 7 or 8, characterized in that the heating appliances or electrodes (9, 10, 18, 19) are applied by evaporation depositing, sputtering or plasma coating on the internal walls of the passage duct (2, 15).

10. A device according to one of claims 6 to 9, characterized in that the heating appliances or electrodes (9, 10, 18, 19) provided inside the passage duct (2, 15) are surrounded by a protective layer, in particular a quartz glass layer.

11. A device according to one of claims 1 to 10, characterized in that the internal surface of the passage duct (2, 15) has raised portions, in particular pyramid-shaped or hemispherical raised portions.

12. A device according to one of claims 1 to 11, characterized in that the internal surface of the passage duct (2, 15) has a surface roughness which is smaller than the average diameter of the solids in the gas flow.

13. A device according to one of claims 1 to 12, characterized in that the base body (1) is mounted in a casing (7), made, in particular, of high temperature resistant steel and/or aluminium or carbon fibre-reinforced carbon; and that between the surface of the base body (1) and the casing (7), provision is made for a cooling appliance (8).

14. A device according to one of claims 1 to 13, characterized in that in the base body (1, 14), in particular in the immediate vicinity of the passage duct or ducts (2, 15), provision is made for at least one cooling duct.

15. A device according to one of claims 1 to 14, characterized in that on the inlet side (4) of the passage duct (2), provision is made for pressure-resistant and gas-tight closing appliances (3) made, in particular, of the material of the base body (1), in particular, adjustable flaps or gas valves.

16. A device according to one of claims 1 to 15, characterized in that on the outlet side (6) of the passage duct (2), there is arranged a rotor consisting in particular of boron carbide or silicon carbide.

17. A device according to one of claims 1 to 16, characterized in that in the passage duct (2), provision is made for a feeder line (21) for adding metered gaseous and/or solid combustibles.

18. A device according to one of claims 1 to 17, characterized in that on the inlet side (4) of the passage duct (2), there are arranged sensors (5) for registering the temperature and/or the pressure and/or gas velocity and/or the content of solids of the gas.

19. A device according to claim 18, characterized in that the sensors (5) are connected to a processing unit which is connected via control lines to the drive for the closing appliances (3) and/or to control devices for the energy supply to the heating appliances (9, 10, 12, 18, 19, 20).

20. A device according to one of claims 1 to 19, characterized in that the material of the base body is separated into fractions of less than 0.6 µm, of 0.6 to 1.8 µm and of 4.0 to 4.5 µm of average grain size; that there is set a mixture of 5 to 15%, in particular 10% of the smallest fraction, 25 to 35%, in particular 30%, of the medium fraction and the rest as the largest fraction, if required, with the addition of reinforcing fibres; and that after preliminary compacting, a hydraulic compression is effected with simultaneous sintering at an increased temperature, under a protective gas atmosphere, if required.

21. A device according to claim 20, characterized in that a SiC fibre proportion of 20 to 30% by volume, preferably 27% by volume, is added to the mixture at a thickness/length ratio of the fibres of more than 1:60, preferably greater than 1:85, and 0.3 to 5.0% ZrO₂ into the fraction that is smaller than 0.6 µm.

22. A device according to claim 20 or 21, characterized in that the precompaction is effected to a density of 60 to 70%, preferably 65 to 69% of the theoretical density.

23. A device according to claim 20, 21 or 22, characterized in that the compression is effected with simultaneous sintering at a hydraulic pressure of over 200 kN/cm² and a temperature of over 2,100 °C.

24. A device according to one of claims 20 to 23, characterized in that the thermal after-treatment is effected while maintaining the pressure obtaining during the compression.

25. A device according to one of claims 20 to 24, characterized in that during heating in the hydraulic press, at least three temperature holding stages of approximately 180°C, 760°C and 1,800°C are maintained over at least ten minutes.

26. A device according to one of claims 20 to 25, characterized in that after the degassing stage, a linear pressure increase is preserved as the pressure is built up in the heating press.

## Revendications

1. Dispositif pour brûler des corps solides et décomposer des composés chimiques dans un courant gazeux, notamment pour l'élimination de la suie de gaz d'échappement, ***caractérisé en ce qu'***un corps de base (1, 14) composé d'une matière résistante aux hautes températures et aux alternances de température, est muni d'au moins un canal de passage (2, 15) pour le courant gazeux, en ce que le canal de passage (2, 15) est réalisé sensiblement sous la forme d'un canal spiral et en ce que le corps de base (1, 14) muni de dispositifs de chauffage (9, 10, 12, 18, 19, 20) servant à atteindre les températures supérieures a 1300°C, de préférence supérieures à 1900°C.

2. Dispositif selon la Revendication 1, ***caractérisé en ce que*** le corps de base (1, 14) est composé d'une matière céramique ou pseudo-céramique armée de fibres comme, par exemple, SiC-B₄C, SiC-B, SiC-Si, SiC-BN, SiC-Si₃Na, renforcé de fibres, ou de carbone ou graphite renforcé de fibres de carbone.

3. Dispositif selon la Revendication 1 ou 2, ***caractérisé en ce qu'***il est prévu une multiplicité de canaux de passage (2, 15).

4. Dispositif selon la Revendication 1, 2 ou 3, ***caractérisé en ce que*** le corps de base (1) est composé d'un grand nombre de segments en forme de disque dont les surfaces en appui les unes contre les autres délimitent les canaux de passage (2).

5. Dispositif selon la Revendication 1 ou 2, ***caractérisé en ce que*** le corps de base est formé d'un cylindre (14) logé à joint étanche dans un cylindre creux (17), le canal de passage (15) étant formé au niveau de la surface latérale du cylindre (14), sous la forme d'un canal hélicoïdal (15).

6. Dispositif selon une des Revendications 1 à 5,***caractérisé en ce que*** le dispositif de chauffage (9, 10, 12, 18, 19, 20) est composé d'éléments chauffants à résistance, d'éléments chauffants inductifs, ou d'électrodes servant à former un champ à haute fréquence, qui sont disposés dans le canal de passage (2, 15).

7. Dispositif selon une des Revendications 1 à 9, ***caractérisé en ce que,*** dans le canal de passage (2, 15), sont prévues des électrodes (9, 10, 18, 19) servant à établir un champ à haute tension ainsi qu'au moins une bobine d'induction (12, 20) servant à établir un champ à haute fréquence dans la région du canal de passage.

8. Dispositif selon la Revendication 7, ***caractérisé en ce que*** la bobine d'induction (20) entoure les électrodes (18, 19).

9. Dispositif selon la Revendication 6, 7 ou 8, ***caractérisé en ce que*** les dispositifs de chauffage ou électrodes (9, 19, 18, 19) sont formés sur les parois internes du canal de passage (2, 15) par évaporation, pulvérisation cathodique, ou revêtement au plasma.

10. Dispositif selon une des Revendications 6 à 9, ***caractérisé en ce que*** les dispositifs de chauffage ou électrodes (9, 10, 18, 19) prévus dans le volume intérieur du canal de passage (2, 15) sont recouverts d'une couche protectrice, notamment d'une couche de verre de quartz.

11. Dispositif selon une des rRvendications 1 à 10, ***caractérisé en ce que*** la surface interne du canal de passage (2, 15) présente des protubérances, de préférence des saillies pyramidales ou hémisphériques.

12. Dispositif selon une des rRvendications 1 à 12, ***caractérisé en ce que*** la surface interne du canal de passage (2, 15) possède une rugosité de surface qui est inférieure au diamètre moyen des solides contenus dans le courant gazeux.

13. Dispositif selon une des Revendications 1 à 12, ***caractérisé en ce que le*** corps de base (1) est monté dans un carter (7) composé en particulier d'acier et/ou aluminium ou carbone renforcé de fibres de carbone, résistant aux hautes températures et en ce qu'un dispositif de refroidissement (8) est prévu entre la surface du corps de base (1) et le carter (7).

14. Dispositif selon une des Revendications 1 à 13, ***caractérisé en ce qu'***au moins un canal de refroidissement est prévu dans le corps de base (1, 14), dans une position immédiatement adjacente au canal de passage (2, 15) ou aux canaux de passage.

15. Dispositif selon une des Revendications 1 à 14, ***caractérisé en ce qu'***au droit du côté d'entrée (4) du canal de passage (2), sont prévus des dispositifs obturateurs (3), notamment des volets ou vannes de gaz, notamment réglables, résistants à la pression et étanches aux gaz, notamment faits de la matière du corps de base (1).

16. Dispositif selon une des Revendications 1 à 15, ***caractérisé en qu'***au droit du côté de sortie (6) du canal de passage (2) est agencée une roue à aubes notamment composée de carbure de bore ou de carbure de silicium.

17. Dispositif selon une des Revendications 1 à 16, ***caractérisé en ce que,*** dans le canal de passage (2) est prévue une conduite d'amenée (21) servant pour l'injection dosée de combustibles gazeux et/ou solides.

18. Dispositif selon une des Revendications 1 à 17, ***caractérisé en ce qu'***au droit du côté d'entrée (4) du canal de passage (2), sont agencés des capteurs (5) destinés à capter la température et/ou la pression et/ou la vitesse et/ou la teneur en solides du gaz.

19. Dispositif selon la Revendication 18, ***caractérisé en ce que*** les capteurs (5) sont connectés à une unité d'analyse qui est connectée par des canalisations de commande à des entraînements agissant sur les dispositifs obturateurs (3) et/ou à des dispositifs de réglage agissant sur l'apport d'énergie aux dispositifs de chauffage (9, 10, 12, 18, 19, 20).

20. Dispositif selon une des Revendications 1 à 19, ***caractérisé en ce que*** la matière du corps de base est divisée en fractions ayant respectivement des grosseurs de grain moyenne inférieure à 0,6 um, comprise entre 0,6 et 1,8 um et comprise entre 4,0 et 4,5um, en ce que le mélange est dosé comme suit : 5 à 15 %, notamment 10 %, de la fraction la plus fine, 25 à 35 %, notamment 30 %, de la fraction moyenne, le reste étant composé de la fraction la plus grossière, éventuellement avec addition de fibres de renforcement, et en ce qu'après une pré-compression, s'effectue une compression hydraulique, avec frittage simultané, à haute température, éventuellement sous atmosphère gazeuse protectrice.

21. Dispositif selon la Revendication 20, ***caractérisé en ce qu'***une proportion de fibres de SiC de 20 à 30 % en volume, de préférence de 27 % en volume, comportant un rapport épaisseur : longueur des fibres supérieur à 1:60, de préférence supérieur à 1:85, et de 0,3 à 5,0 % de ZrO₂ sont ajoutés au mélange dans la fraction inférieure à 0,6 um.

22. Dispositif selon la Revendication 20 ou 21, ***caractérisé en ce que*** la pré-compression s'effectue à une densité de 60 à 70 %, de préférence de 65 à 69 %, de la densité théorique.

23. Dispositif selon la Revendication 20, 21 ou 22, ***caractérisé en ce que*** la compression avec frittage simultané s'effectue sous une pression hydraulique de plus de 200 kN/cm² et à une température de plus de 2100°C.

24. Dispositif selon une des Revendications 20 à 23, ***caractérisé en ce que*** le post-traitement thermique s'effectue avec maintien de la pression qui règne pendant la compression.

25. Dispositif selon une des Revendications 20 à 24, ***caractérisé en ce que,*** lors du chauffage dans la presse hydraulique, on respecte au moins trois paliers de température, notamment à des températures d'environ 180°C, 760°C et 1800°C pendant au moins 10 minutes.

26. Dispositif selon une des Revendications 20 à 25, ***caractérisé en ce qu'***après la phase de dégazage, on respecte une élévation linéaire de la pression lors de l'établissement de la pression dans la presse à chaud
